Europäisches Patentamt

European Patent Office

Office européen des brevets

(11) Veröffentlichungsnummer: **0 108 839**
**A1**

(12) **EUROPÄISCHE PATENTANMELDUNG**

(21) Anmeldenummer: 82201578.0

(51) Int. Cl.³: **A 01 K 1/01**, B 65 D 81/36

(22) Anmeldetag: 10.11.82

(43) Veröffentlichungstag der Anmeldung: 23.05.84
Patentblatt 84/21

(84) Benannte Vertragsstaaten: **IT**

(71) Anmelder: **ZWIEHOFF, Mechthild, Reichberg 29,
D-7827 Löffingen (DE)**

(72) Erfinder: **ZWIEHOFF, Mechthild, Reichberg 29,
D-7827 Löffingen (DE)**

(74) Vertreter: **Riebling, Günter, Dr. et al, Patentanwälte
Dr.-Ing., Dipl.-Ing., Ing.(grad) G. Riebling Dr.-Ing.,
Dipl.-Ing. P. Riebling Rennerle 10 Postfach 3160,
D-8990 Lindau (Bodensee) (DE)**

(54) Behälter zur Aufnahme von Einstreumaterial zur Fäkalienbeseitigung.

(57) Gegenstand der Erfindung ist ein Behälter zur Aufnahme von Einstreumaterial zur Fäkalienbeseitigung bei der Haustierhaltung von Kleintieren. Aufgabe der Erfindung ist, einen Behälter so weiterzubilden, daß die Fäkalienbeseitigung bei der Kleintierhaltung wesentlich schneller, kostengünstiger und hygienischer erfolgt.

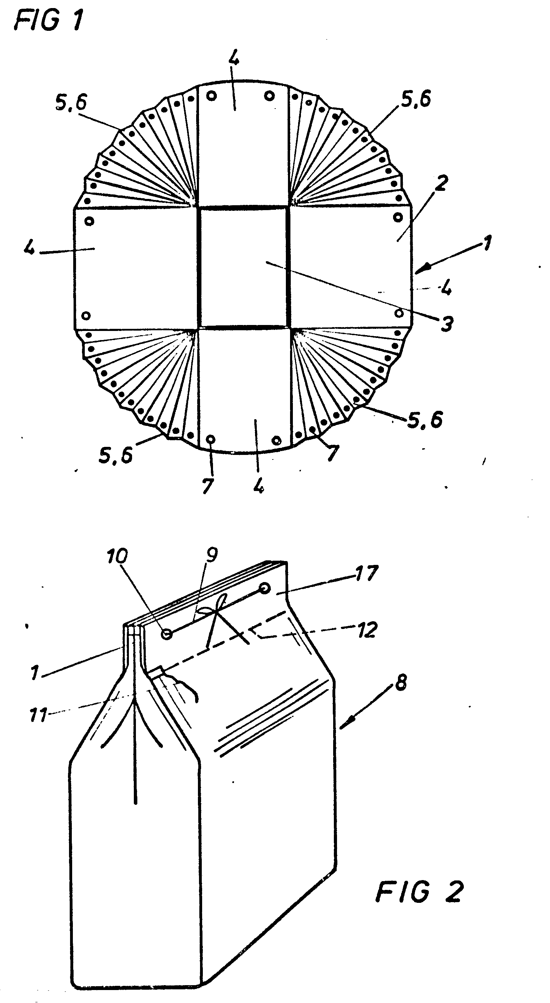

Die Lösung der Aufgabe erfolgt dadurch, daß der Beutel aus einem das Einstreumaterial umschließenden Innenbeutel und einem den Innenbeutel umschließenden Außenbeutel besteht und daß der Innenbeutel aus einem Faltzuschnitt besteht, der radiale Faltungen aufweist. Der in Fig. 1 dargestellte Innenbeutel 1 besteht aus einem Faltzuschnitt 2, der ein inneres, etwa rechteckig geformtes, umgefaltetes Bodenteil 3 aufweist, an dessen Kanten sich gleichfalls ungefaltete Wandteile 4 anschließen. Die radial auswärts weisenden Längskanten der Wandteile 4 sind durch Eckteile 5 miteinander verbunden, die ziehharmonikaartige Faltungen 6 aufweisen. Diese Faltungen 6 erstrecken sich von den inneren Ecken der Wandteile 4 radial nach außen.

0108839

------------------------------------------------

Behälter zur Aufnahme von Einstreumaterial
zur Fäkalienbeseitigung

------------------------------------------------

Gegenstand der Erfindung ist ein Behälter zur Aufnahme von Einstreumaterial zur Fäkalienbeseitigung bei der Haustierhaltung von Kleintieren, wie Hunde, Katzen, Vögel, Hamster und dergleichen, bestehend aus einem das Einstreumaterial umschliessenden Beutel.

Ein eingangs genannter Behälter ist in vielfältigen Ausführungsformen bekannt geworden. Er wird als Papiersack und Papierbeutel in der Kleintierhandlung gekauft, wobei er bereits schon mit einer gewissen Menge von Einstreumaterial gefüllt ist. Zur Ingebrauchnahme wird der Beutel aufgerissen und das Einstreumaterial wird in einen der Fäkalienhaltung dienenden Behälter eingeschüttet. Die vom Kleintier abgegebenen Fäkalien werden von dem Einstreumaterial geruchsbindend aufgenommen, wobei die Geruchsbindung nur über einen gewissen Zeitraum, abhängig von der Menge des verwendeten Einstreumaterials, erfolgt. Das Einstreumaterial ist dann verbraucht und muß aus dem Behälter entfernt werden. Hierzu wird der Behälter in einen Abfalleimer entleert, wobei der Nachteil besteht, daß noch verschmutztesEinstreumaterial an den Ecken und Wandungen des Behälters haftet und hierdurch eine unhygienische Entleerung gegeben ist. In der Regel wird der Behälter dann ausgespült, was mit dem Nachteil verbunden ist, daß bei nicht vollständiger Trocknung des Behälters und vorherigem Einfüllen von Einstreumaterial dieses an den Innenwandungen des Behälters klebt und eine unhygienische Schmutzschicht bildet.

Die eingangs beschriebene Verwendung eines Beutels, der mit Einstreumaterial gefüllt ist, ist also außerordentlich zeitraubend, arbeitsaufwendig, unhygienisch und für die Umgebung mit der Gefahr der Verschmutzung verbunden.

Die Erfindung hat sich ausgehend von einem Behälter der eingangs genannten Art die Aufgabe gestellt, einen derartigen Behälter so weiterzubilden, daß die Fäkalienbeseitigung bei der Kleintierhaltung wesentlich schneller, kostengünstiger und hygienischer erfolgt.

Zur Lösung der gestellten Aufgabe ist die Erfindung dadurch gekennzeichnet, daß der Beutel aus einem das Einstreumaterial umschliessenden Innenbeutel und einem den Innenbeutel umschließenden Außenbeutel besteht und daß der Innenbeutel aus einem Faltzuschnitt besteht, der radiale Faltungen aufweist.

Mit der erfindungsgemässen technischen Lehre wird eine sogenannte Einwegpackung vorgeschlagen, mit der gewährleistet ist, daß der zur Aufnahme von Einstreumaterial dienende Beutel, der als solches in der Kleintierhandlung gekauft wird, gleichzeitig als Auskleidungsmaterial für einen Fäkalienkasten (Behälter) Verwendung findet. Bei der erfindungsgemässen Einwegpackung kauft der Benutzer einen derartigen Beutel, der mit Einstreumaterial gefüllt ist, in der Kleintierhandlung und reisst ihn zur Ingebrauchnahme auf. Das Aufreissen geschieht zwischen dem Innen- und dem Außenbeutel, so daß der Außenbeutel, der formgebend und dicht vorher den Innenbeutel umschloss, wegfällt. Der Aussenbeutel kann hierbei nach wie vor am Innenbeutel noch festhaften, umschließt diesen aber nicht mehr dicht und formgebend.

Nachdem der Innenbeutel aus einem Faltzuschnitt besteht, der radiale Faltungen aufweist, und nachdem der Innenbeutel gleichzeitig mit dem Einstreumaterial gefüllt ist, kann nun der so vorbereitete Innenbeutel zusammen mit dem darin enthaltenen Einstreumaterial in einen Fäkalienkasten (Behälter) eingelegt werden. Der Innenbeutel schmiegt sich aufgrund seiner radialen Faltungen dicht und formschlüssig an den Innenwandungen des Behälters an und wird in einer bevorzugten Ausführungsform über die oberen Kanten des Behälters zur Aussenseite hin geklappt, so daß er teilweise auch noch den Aussenumfang des Behälters (zumindest am oberen Rand) umfasst. Der Behälter ist nun dicht und vollständig geschützt mit dem Innenbeutel ausgekleidet und das Einstreumaterial ist nun unmittelbar mit dem Behälter zur Aufnahme der Fäkalien der Kleintiere bereit.

Nach erfolgtem Verbrauch des Einstreumaterials ergreift der Benutzer den Innenbeutel, zieht ihn mit Hilfe der Schnur zusammen und wirft den gesamten Innenbeutel mit dem darin enthaltenen, verbrauchten Einstreumaterial in einen Abfallbehälter. Bei dieser Vorgehensweise ist besonders vorteilhaft, daß der Benutzer mit dem Einstreumaterial nicht in Berührung kommt, so daß eine außerordentlich hygienische Beseitigung des verbrauchten Einstreumaterials gewährleistet ist.

Auch die Innenseite des Behälters bleibt vollständig sauber und geruchsfrei, weil sie vorher vollständig mit dem Innenbeutel ausgekleidet war. Der Behälter braucht nun nicht mehr umständlich gereinigt und ausgewaschen zu werden, und es besteht nicht mehr die Gefahr der unhygienischen Ablagerung von Einstreumaterial oder Fäkalien an dem Behälter.

Eine besondere Arbeitserleichterung und eine besondere Handhabungserleichterung ergibt sich nach dem Gegenstand des Anspruches 2 dadurch, daß der Faltzuschnitt aus einem ungefalteten mittleren Bodenteil besteht, an dessen Außenkanten sich ungefaltete Wandteile anschließen, wobei die Verbindung zwischen den Wandteilen aus zick-zack-gefalteten Eckteilen besteht. Durch die Ausbildung des Faltzuschnittes aus einem ungefalteten Bodenteil und sich daran anschließenden, ungefalteten Wandteilen ergibt sich der Vorteil, daß der vorgeschlagene Faltzuschnitt universell an verschiedene Behälter (Fäkalienkasten) anpassbar ist. Auf Grund der Faltungen in den Eckteilen kann der Faltzuschnitt formschlüssig sowohl in runde Behälter als auch in rechteckige Behälter eingelegt werden.

Besonders vorteilhaft nach dem Gegenstand des Anspruches 3 ist hierbei, wenn am Aussenumfang des Faltzuschnitts in geringem, gegenseitigem Abstand Löcher angeordnet sind, die von einer Schnur durchgriffen sind. Die Schnur dient zur verschiebungsgesicherten Halterung des Innenbeutels in dem Behälter. Nach dem Umschlagen der Oberkanten des Faltzuschnittes (Innenbeutels) über die Oberkanten des Behälters liegt die Schnur nunmehr an den Aussenwandungen des Behälters an und kann nun zusammengerafft und verknotet werden. Die Schnur umschließt nun in einem geschlossenen Kreis die Aussenwandung des Behälters, so daß der Innenbeutel hierdurch verschiebungsgesichert mit dem Behälter verbunden ist.

Nach erfolgtem Verbrauch des Einstreumaterials kann die Schnur über die Behälteraussenwandung hochgezogen werden und der gesamte Innenbeutel kann an der Schnur aus dem Behälter herausgezogen werden. Aufgrund der Tatsache, daß die Schnur als geschlossener Ring den gesamten Faltzuschnitt durchgreift, wird mit Ergreifen der Schnur die Oberseite des Behälters zusammengerafft und schließt sich hierdurch selbsttätig. Es besteht nun während der Entfernung des Innenbeutels aus dem Behälter nicht mehr die Gefahr, daß verbrauchtes Einstreumaterial verschüttet wird. Der sich selbsttätig schliessende Behälter kann nun mit der Schnur als Tragegriff in einen Abfallbehälter weggeworfen werden.

Eine besonders einfache Handhabung des Beutels, bestehend aus Innen- und Außenbeutel, ergibt sich nach dem Gegenstand des Anspruches 4 dadurch, daß der Aussenbeutel durch Klebung oder Haftung mit dem Innenbeutel verbunden oder lose ist und mit den Löchern des Innenbeutels fluchtende Löcher aufweist, die von der Schnur durchgriffen sind. Der aus Innen- und Außenbeutel bestehende Beutel kann nun mit der Schnur als Tragegriff als Verpackungseinheit in der Kleintierhandlung verkauft werden. Die Schnur, die sowohl den Innenbeutel als auch den Aussenbeutel durchgreift, dient hierbei als Tragegriff, so daß der Beutel gewissermassen einfach transportiert werden kann.

Die Trennung von Innen- und Aussenbeutel erfolgt nach dem Gegenstand des Anspruches 5 besonders einfach dadurch, daß in der Nähe des Stehkragens des Aussenbeutels zwischen dem Innen- und dem Aussenbeutel eine Aufreißschnur angeordnet ist. Mit Hilfe dieser Aufreißschnur wird der Innenbeutel vom Außenbeutel im Bereich des Stehkragens und der Seitenwandung des Außenbeutels getrennt und der Aussenbeutel fällt dann vom Innenbeutel ab oder kann noch an diesem durch Klebung oder Heftung anhaften.

Eine kostengünstige Herstellung ergibt sich nach dem Gegenstand des Anspruches 6 dadurch, daß der Innenbeutel aus einem wasserfesten Papier besteht. Dieses Papier hat den Charakter eines Packpapiers.

In einer anderen Ausführungsform kann der Innenbeutel aber auch aus einem kunststoffbeschichteten Papier bestehen.

Nach dem Gegenstand des Anspruches 7 besteht der Aussenbeutel aus einem Bedruckmaterial, z.B. einer Bedruckfolie oder einem beschichteten Papier, so daß es möglich ist, den Aussenbeutel mit Werbehinweisen und entsprechenden, graphischen Ausgestaltungen zu versehen.

Die Umschließung des Innenbeutels mit dem Aussenbeutel ist notwendig, um zu verhindern, daß während der Füllung des Innenbeutels mit dem Einstreumaterial das Einstreumaterial die Faltungen auseinanderzieht und der Innenbeutel sich hierdurch unzulässig verformt. Der Aussenbeutel bestimmt also die Formgebung des Innenbeutels in seinem Stadium als Verkaufseinheit.

Eine weitere Ausführungsform sieht nach dem Gegenstand des Anspruches 10 vor, daß der aus Innen- und Aussenbeutel bestehende Beutel im Innenbeutel eines größeren Beutels aufgenommen ist, der ebenfalls aus einem Innen- und einem den Innenbeutel dicht umschliessenden Aussenbeutel besteht. In der Art des bekannten russischen Holzspielzeuges "Puppe in der Puppe" kann nun eine Groß-Verkaufseinheit in der Kleintierhandlung angeboten werden, bei der in einem großen ersten Beutel, bestehend aus Innen- und Außenbeutel, ein kleinerer Beutel, wiederum bestehend aus Innen- und Außenbeutel, enthalten ist und in diesem wiederum ein noch kleinerer Beutel, der wiederum aus Innen- und Aussenbeutel besteht. Die Anpassung der verschiedenen Beutel aneinander kann so getroffen sein, daß die Grössenabweichungen nur unbedeutend sind, um zu gewährleisten, daß die verschiedenen Beutel auch in einen gleichen Behälter passen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Fig. 1 Draufsicht auf den Innenbeutel in Form eines Faltzuschnittes in seinem Stadium vor der endgültigen Formung des Innenbeutels und der Befüllung mit Einstreumaterial,

Fig. 2 fertiggestellter Beutel, bestehend aus Innen- und Aussenbeutel in seinem Stadium als Verkaufseinheit, fertig befüllt mit Einstreumaterial,

Fig. 3 perspektivische Ansicht des Innenbeutels, befüllt mit Einstreumaterial, in seinem Stadium vor dem Einbringen in einen Behälter bzw. nach Herausnahme aus dem Behälter,

Fig. 4 perspektivische Ansicht eines mit dem Innenbeutel ausgekleideten Behälters zur Aufnahme der Fäkalien.

Der in Fig. 1 dargestellte Innenbeutel 1 besteht aus einem Faltzuschnitt 2, der ein inneres, etwa rechteckig geformtes, ungefaltetes Bodenteil 3 aufweist, an dessen Kanten sich gleichfalls ungefaltete Wandteile 4 anschließen.

Die radial auswärts weisenden Längskanten der Wandteile 4 sind durch Eckteile 5 miteinander verbunden, die ziehharmonikaartige Faltungen 6 aufweisen. Diese Faltungen 6 erstrecken sich von den inneren Ecken der Wandteile 4 radial nach aussen.

Dicht an der Aussenbegrenzung des gesamten Faltzuschnitts sind in geringem gegenseitigen Abstand Löcher 7 angeordnet, wobei wesentlich ist, daß jede Faltung 6 ein Loch aufweist.

Der gesamte Faltzuschnitt 2 besteht in einer bevorzugten Ausführungsform aus einem wasserfesten Papier, das den Charakter eines Packpapiers aufweist.

Die beschriebene Formgebung des Faltzuschnittes 2 ist nicht zwingend. Es ist selbstverständlich möglich, auch die Wandteile 4 mit entsprechenden Faltungen 6 zu versehen. Ebenso ist es möglich, auch das Bodenteil 3 mit Faltungen 6 zu versehen. Auch die Formgebung am Aussenumfang des Faltzuschnittes 2 hängt von der Art des verwendeten Behälters ab, wobei wesentlich ist, daß die im Ausführungsbeispiel dargestellte Formgebung sowohl für rechteckige als auch für runde Behälter geeignet ist.

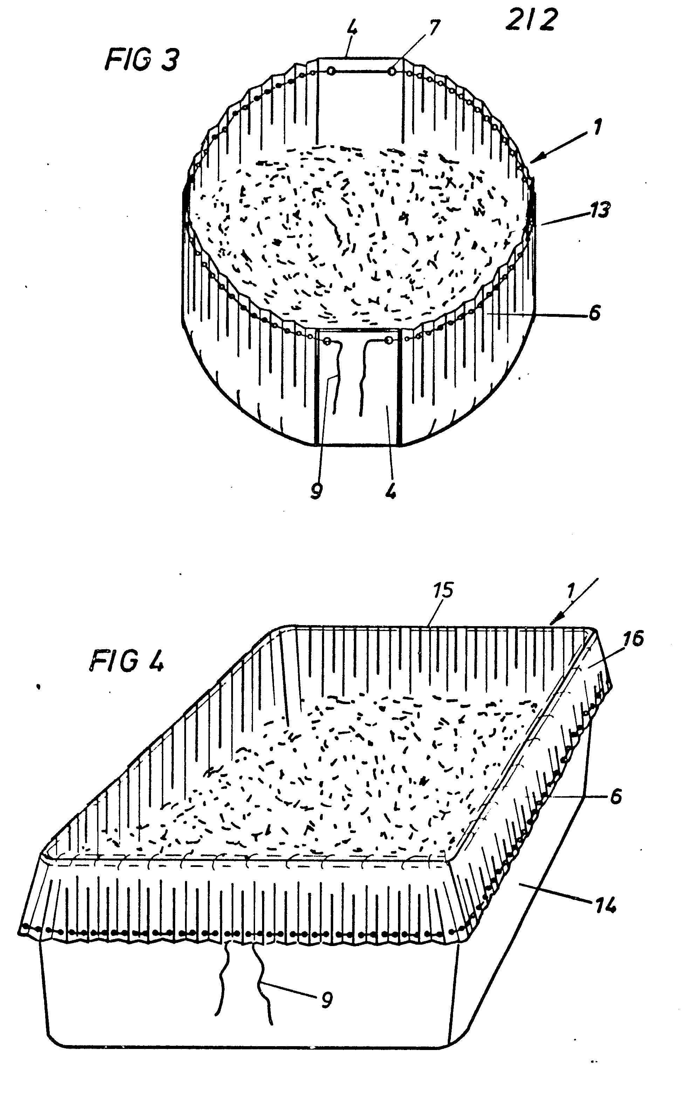

Zur Herstellung des Beutels als Verkaufseinheit, wie in Figur 2 dargestellt, wird der Innenbeutel 1 zunächst nicht mit Einstreumaterial 13 gefüllt, sondern ungefüllt und zusammengerafft in einen die Formgebung des Beutels bestimmenden Außenbeutel 8 hineingestellt und mit diesem durch Klebung oder Heftung verbunden. Der aus Innen- und Aussenbeutel bestehende Beutel wird dann von seiner oberen Öffnung her mit Einstreumaterial 13 gefüllt und nach dem Befüllen mit der Schnur 9 geschlossen. Er nimmt dann die in Fig. 2 gezeigte Formgebung ein, wobei wesentlich ist, daß die Löcher 7 des Innenbeutels mit den beiden Löchern 1o des Aussenbeutels 8 fluchten, so daß die Schnur 9 hindurchgezogen werden kann und als Tragegriff gleichzeitig dient. Unterhalb des Stehkragens 17 ist eine horizontal und dann die Seitenwand herablaufende Aufreißschnur 11 angeordnet, mit deren Aufreissen der Aussenbeutel 8 aufgerissen wird. Die Schnur 9 wird gleichfalls gelöst, so daß der Außenbeutel 8 vom Innenbeutel abfällt. Der Aussenbeutel 1 nimmt dann die in Fig. 3 dargestellte Formgebung ein und wird dann gemäss Fig. 4 in einen Behälter 14 eingesetzt. Das in dem Innenbeutel 1 enthaltene Einstreumaterial 113 ist nun sofort in den Behälter 1 eingebracht. Die Aussenseiten des Innenbeutels 1 werden gemäss der Darstellung in Fig. 4 über den oberen Rand 15 des Behälters umgeklappt, so daß sich äussere Umklappungen 16 des Innenbeutels 1 bilden. Die Schnur 9 wird dann wiederum zusammengerafft, so daß die Umklappung 16 fest am Aussenumfang des Behälters 14 anliegt und dadurch den Innenbeutel gegen Verschieben im Behälter 1 sichert. Nach Verbrauch des Einstreumaterials wird die Schnur 9 gelöst oder einfach nach oben gezogen, so daß die Umklappung 16 wieder nach oben geklappt wird.

Der Innenbeutel 1 nimmt dann die in der Fig. 3 gezeigte Stellung wieder ein; die Schnur 9 wird zusammengerafft, so daß der Innenbeutel sich oben schließt und das verbrauchte Einstreumaterial wird zusammen mit dem Innenbeutel in einen Abfallbehälter weggeworfen.

Mit der gezeigten Einwegpackung ist es also in keinem
Stadium mehr notwendig, das Einstreumaterial mit den
Händen zu berühren. Auch braucht der Behälter 14 nicht
mehr innen oder aussen berührt zu werden und verschmutzt auch nicht mehr.

Statt der Verwendung einer Schnur 9 kann auch ein
Gummizug verwendet werden.

# Patentansprüche

1. Behälter zur Aufnahme von Einstreumaterial (13) zur Fäkalienbeseitigung bei der Haustierhaltung von Kleintieren, wie Hunde, Katzen, Vögel, Hamster und dergleichen, bestehend aus einem das Einstreumaterial umschliessenden Beutel, dadurch gekennzeichnet, daß der Beutel aus einem das Einstreumaterial (13) umschliessenden Innenbeutel (1) und einem den Innenbeutel (1) umschliessenden Aussenbeutel (8) besteht und daß der Innenbeutel (1) aus einem Faltzuschnitt (2) besteht, der radiale Faltungen (6) aufweist.

2. Behälter nach Anspruch 1, dadurch gekennzeichnet, daß der Faltzuschnitt (2) aus einem ungefalteten, mittleren Bodenteil (3) besteht, an dessen Aussenkanten sich ungefaltete Wandteile (4) anschliessen und daß die Verbindung zwischen den Wandteilen (4) aus zick-zack-gefalteten (Faltungen (6)) Eckteilen (5) besteht.

3. Behälter nach Anspruch 1 oder 2, dadurch gekennzeichnet, daß am Außenumfang des Faltzuschnittes (2) in geringem, gegenseitigen Abstand Löcher (7) angeordnet sind, die von einer Schnur (9) durchgriffen sind.

4. Behälter nach einem der Ansprüche 1 bis 3, dadurch gekennzeichnet, daß der Aussenbeutel (8) durch Klebung oder Heftung mit dem Innenbeutel (1) verbunden ist und mit den Löchern (7) des Innenbeutels (1) fluchtende Löcher (10) aufweist, die von der Schnur (9) durchgriffen sind.

5. Behälter nach Anspruch 4, dadurch gekennzeichnet, daß in der Nähe des Steh-

kragens (17) des Aussenbeutels (8) zwischen dem Innen- (1) und dem Außenbeutel (8) eine Aufreißschnur (12) angeordnet ist.

6. Behälter nach einem der Ansprüche 1 bis 5, d a d u r c h   g e k e n n z e i c h n e t , daß der Innenbeutel (1) aus einem wasserfesten Papier besteht.

7. Behälter nach einem der Ansprüche 1 bis 6, d a d u r c h   g e k e n n z e i c h n e t , daß der Aussenbeutel (8) aus einem Bedruckmaterial, z.B. einer Bedruckfolie oder einem beschichteten Papier besteht.

8. Behälter nach einem der Ansprüche 1 bis 7, d a d u r c h   g e k e n n z e i c h n e t, daß die die Löcher (7,10) von Innen- (1) und Außenbeutel (8) durchgreifende Schnur (9) als Tragegriff ausgebildet ist.

9. Behälter nach einem der Ansprüche 1 bis 8, d a d u r c h   g e k e n n z e i c h n e t , daß der Außenbeutel (8) den Innenbeutel (1) dicht und formgebend umschließt.

10. Behälter nach Anspruch 1, d a d u r c h   g e k e n n z e i c h n e t , daß der aus Innen- (1) und Aussenbeutel (8) bestehende Beutel im Innenbeutel eines größeren Beutels aufgenommen ist, der ebenfalls aus einem Innen- (1) und einem den Innenbeutel (1) dicht umschließenden Aussenbeutel (8) besteht.

FIG 1

5,6

5,6

4

2

1

4

3

5,6

4

5,6

7

7

4

10

9

17

1

12

11

8

FIG 2

0108839

212

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | WO-A-8 100 504 (ZWIEHOFF)<br>* Seiten 1-3; Figuren 1,2 *<br>--- | 1,10 | A 01 K 1/01<br>B 65 D 81/36 |
| A | US-A-3 626 900 (FAILLA)<br>* Spalte 2, Zeile 54 - Spalte 3, Zeile 10; Figuren 1,4 *<br>--- | 3 | |
| A | DE-A-2 754 620 (BADER)<br>* Insgesamt *<br>--- | 1,6 | |
| A | FR-A- 632 539 (VOIT)<br>* Figuren 3,4 *<br>--- | 3,8 | |
| A | US-A-3 227 137 (GOLDMAN)<br><br>----- | | |

| RECHERCHIERTE SACHGEBIETE (Int. Cl. 3) |
|---|
| B 65 D<br>A 01 K |

Der vorliegende Recherchenbericht wurde für alle Patentansprüche erstellt.

| Recherchenort | Abschlußdatum der Recherche | Prüfer |
|---|---|---|
| DEN HAAG | 07-07-1983 | BESSY M.J.F.M.G. |